# EUROPÄISCHE PATENTSCHRIFT

(11) **EP 2 037 185 B1**
(45) Veröffentlichungstag und Bekanntmachung des Hinweises auf die Patenterteilung: **20.07.2011**
(21) Anmeldenummer: 07450155.2
(22) Anmeldetag: 11.09.2007
(51) Int. Cl.: F24D 3/12

(54) **Vorrichtung zur Herstellung einer Bauplatte**
Device for manufacturing a structural panel
Dispositif destiné à la fabrication d'un panneau de construction

(43) Veröffentlichungstag der Anmeldung: 18.03.2009
(73) Patentinhaber: Variotherm Heizsysteme GmbH., 2544 Leobersdorf (AT)
(72) Erfinder: Watzek, Alexander, Ing., 2544 Leobersdorf (AT); Watzek, Wilhelm, 2542 Kottingbrunn (AT)
(74) Vertreter: Rippel, Andreas

(56) Entgegenhaltungen:
- DE-A1- 2 855 345
- DE-U1- 20 106 049
- DE-U1- 29 912 894

## Beschreibung

Die Erfindung bezieht sich auf ein Verfahren zur Herstellung einer Bauplatte, welche mit Kanälen versehen ist, in denen ein flexibles Rohr zur Aufnahme eines Trägermediums zur Heizung oder Kühlung liegt, wobei das auf einer Haspel aufgewickelte Rohr mittels einer Rolle in die Kanäle gedrückt wird, und die Haspel auf einer fahrbaren Tragkonstruktion gelagert ist, wobei ferner Führungen für das Rohr zwischen der Haspel und der Rolle angeordnet sind.

Bauplatten der genannten Art sind vielfach bekannt. Derartige Bauplatten werden insbesondere bei der Errichtung von Heiz- und/oder Kühlwänden verwendet.

Damit das Rohr in den Kanälen der Bauplatte nach dessen Einbringung festgehalten wird, müssen die Kanäle zumindest teilweise schmäler als die Stärke des Rohres sein. Dies kann in bekannter Weise durch eine Hinterschneidung des Kanals erreicht werden. Das Rohr muß daher beim Einbringen hinter diese Engstelle des Kanals gebracht werden, was bei bekannten Verfahren händisch durch Hammerschläge erreicht wird. Ein solches Verfahren ist zeitaufwendig und bringt auch hohe Personalkosten mit sich.

In der US 2004/258480 A1 ist ein Gerät beschrieben, bei dem am Ende einer Stange eine Rolle angeordnet ist, mit der das Rohr händisch in den Kanal eingedrückt werden soll. Auch diese Verfahrensweise ist zeitaufwendig und verursacht hohe Personalkosten.

Nach einem in der DE 199 20 457 A1 beschriebenen Vorschlag soll das Rohr vor dem Einsetzen in den Kanal erwärmt und in diesem warmen Zustand, in dem es verformbarer ist, eingesetzt werden. Ein solches Verfahren ist schon wegen der für die Erwärmung des Rohres notwendigen Einrichtungen relativ kompliziert und demgemäß auch teuer.

In der DE 299 12 894 U1 ist ein Verfahren nach dem Oberbegriff des Anspruchs 1 mit einer Verlegevorrichtung für Fußboden-Rohrleitungen beschrieben, wobei die Verlegevorrichtung als fahrbarer Wagen ausgestaltet ist, und wobei der Wagen eine Vorratstrommel mit der Rohrleitung trägt. Der Wagen ist am Fußboden des Raumes verfahrbar, in dem die Rohrleitungen verlegt werden und braucht relativ viel Platz. Die Herstellung von Bauplatten, die zur Verlegung an anderen Orten bestimmt sind, ist nicht möglich.

Die Erfindung hat es sich zum Ziel gesetzt, ein Verfahren der eingangs genannten Art zu schaffen, mit dem die Herstellung von Bauplatten vollautomatisch möglich ist. Erreicht wird dies dadurch, dass die Rolle am unteren Ende der hängenden und nach Art einer Laufkatze fahrbaren Tragkonstruktion für die Haspel angeordnet ist.

Es hat sich gezeigt, dass mit einem solchen Verfahren das Rohr auch im nicht erwärmten Zustand soweit in die Kanäle gedrückt werden kann, dass sein größter Durchmesser hinter die Engstellen der Kanäle zu liegen kommt, so dass eine sichere Befestigung des Rohres in den Kanälen erreicht wird. Das Eindrücken erfolgt dabei vollautomatisch ohne dass eine Bedienungsperson die Rolle führen muss.

Zur Durchführung des zur Vorbereitung des erfindungsgemäßen Verfahrens erforderlichen Fräsvorganges wird ein Fräser vorgeschlagen, der im unteren Teil annähernd kugelförmig und im oberen Teil trichterförmig erweitert ausgebildet ist, wobei der annähernd kugelförmige Teil bis über die Mittenebene der Kugel reicht. Dadurch wird einerseits die erforderliche Hinterschneidung zum Halten des eingedrückten Rohres, andererseits aber auch die für das leichtere Eindrücken des Rohres vorgesehene trichterförmige Erweiterung erreicht.

Nachstehend ist die Erfindung anhand von in den Zeichnungen dargestellten Ausführungsbeispielen näher erläutert, ohne auf diese Beispiele beschränkt zu sein. Dabei zeigen:
Fig. 1 eine Draufsicht auf eine mit Kanälen versehene Bauplatte;
Fig. 2 eine schematische Seitenansicht einer Vorrichtung zum Eindrücken des Rohres in die Kanäle der Bauplatte;
Fig. 3 ebenfalls schematisch den Umriß des Fräsers für die Herstellung der Kanäle.

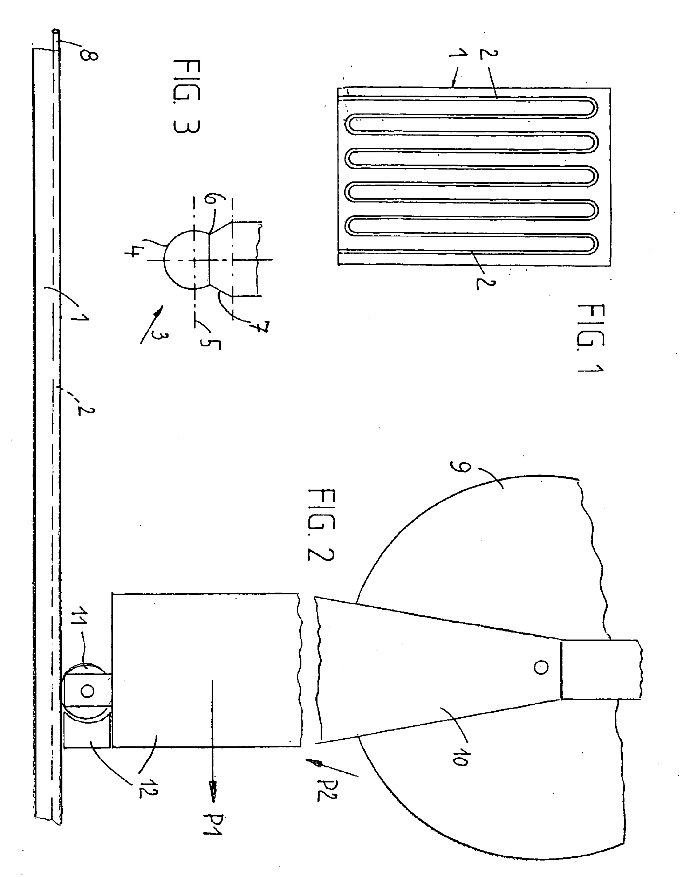

Gemäß Fig. 1 ist eine Bauplatte 1 mit einem Kanal 2 versehen. Dieser verläuft in Schleifen und dient der Aufnahme eines Rohres, durch das ein Heiz- oder Kühlmedium strömt.

Der Kanal 2 wird mit einem Fräser 3 hergestellt, dessen Umriß in Fig. 3 vergrößert und schematisch dargestellt ist. Dieser Umriß entspricht demnach auch dem Querschnitt des Kanals 2. Im unteren Teil 4 hat der Fräser 3 annähernd kugelförmige Gestalt, wobei die Kugelform bis über die Mittelebene 5 der Kugel reicht. Es wird dadurch eine Hinterschneidung 6 gebildet, die in Fig. 3 übertrieben dargestellt ist. Im Oberteil 7 erweitert sich der Querschnitt trichterförmig.

In den mittels eines Fräsers 3 hergestellten Kanal 2 wird mit der in Fig. 2 schematisch dargestellten Vorrichtung ein Rohr 8 eingedrückt, und zwar so weit, dass es hinter der Hinterschneidung 6 zu liegen kommt. Das Rohr 2 ist dabei auf einer Haspel 9 aufgewickelt, die an einer Tragkonstruktion 10 gelagert ist. Die Tragkonstruktion 10 hängt an einer Schiene (nicht dargestellt) und ist auf dieser Schiene in Richtung des Pfeiles P1 nach Art einer Laufkatze fahrbar.

Am unteren Ende der Tragkonstruktion 10 ist eine Rolle 11 gelagert. Diese Rolle 11 rollt auf der darunterliegenden Bauplatte 1 ab. Das Rohr 8 wird von der Haspel 9 in Richtung des Pfeiles P2 abgezogen und über Führungen 12 der Rolle 11 zugeführt.

Im Rahmen der Erfindung sind zahlreiche Abänderungen möglich. So könnte die Zuführung des Rohres 8 zur Rolle 11 anders als dargestellt erfolgen. Auch die Form des Fräsers 3 könnte verändert werden.

## Patentansprüche

1. Verfahren zur Herstellung einer Bauplatte (1), welche mit Kanälen (2) versehen ist, in denen ein flexibles Rohr (8) zur Aufnahme eines Trägermediums zur Heizung oder Kühlung liegt, wobei das auf einer Haspel (9) aufgewickelte Rohr (8) mittels einer Rolle (11) in die Kanäle (2) gedrückt wird, und die Haspel (9) auf einer fahrbaren Tragkonstruktion (10) gelagert ist, wobei ferner Führungen (12) für das Rohr (8) zwischen der Haspel (9) und der Rolle (11) angeordnet sind, **dadurch gekennzeichnet, dass** die Rolle (11) am unteren Ende der hängenden und nach Art einer Laufkatze fahrbaren Tragkonstruktion (10) für die Haspel (9) angeordnet ist.

2. Verfahren nach Anspruch 1 mit einem Fräser zur Herstellung der Kanäle (2), **dadurch gekennzeichnet, dass** der Fräser im unteren Teil (4) annähernd kugelförmig und im oberen Teil (7) trichterförmig erweitert ausgebildet ist, wobei der annähernd kugelförmige Teil bis über die Mittenebene (5) der Kugel reicht.

## Claims

1. A method for manufacturing a structural panel (1) which is provided with channels (2) in which a flexible pipe (8) for receiving a carrier medium for heating or cooling lies, wherein the pipe (8) which is coiled on a reel (9) is pressed by means of a roller (11) into the channels (2), and the reel (9) is mounted on a mobile load carrying structure (10), wherein guides (12) for the pipe (8) are further provided between the reel (9) and the roller (11), **characterised in that** the roller (11) is located at the lower end of the suspended load carrying structure (10) for the reel (9) that is movable according to a type of trolley.

2. The method according to claim 1 having a milling cutter for manufacturing the channels (2), **characterised in that** the milling cutter is configured to be approximately spherical in the lower part (4) and expanded in a funnel-shape in the upper part (7), wherein the approximately spherical part extends beyond the central plane (5) of the sphere.

## Revendications

1. Procédé de fabrication d'un panneau de construction (1), qui est muni de canaux (2) dans lesquels se situe un flexible (8) pour recevoir un fluide porteur pour le chauffage ou le refroidissement, le flexible (8) enroulé sur un treuil (9) étant pressé dans les canaux (2) au moyen d'un galet (11) et le treuil (9) étant logé sur une structure porteuse (10) roulante, des guidages (12) pour le flexible (8) étant disposés par ailleurs entre le treuil (9) et le galet (11), **caractérisé en ce que** le galet (11) est disposé sur l'extrémité inférieure de la structure porteuse (10) en suspension et roulante à la manière d'un diable pour le treuil (9).

2. Procédé selon la revendication 1, avec une fraiseuse pour la fabrication des canaux (2), **caractérisé en ce que** dans la partie inférieure (4), la fraiseuse est conçue sous forme approximativement sphérique et dans le partie supérieure (7), elle est élargie en forme d'entonnoir, la partie de forme approximativement sphérique arrivant jusque par-dessus le plan médian (5) de la sphère.
